(19) **Europäisches Patentamt / European Patent Office / Office européen des brevets**

(11) **EP 4 302 261 B1**

(12) **EUROPEAN PATENT SPECIFICATION**

(45) Date of publication and mention
of the grant of the patent:
**04.02.2026 Bulletin 2026/06**

(21) Application number: **22711506.0**

(22) Date of filing: **28.02.2022**

(51) International Patent Classification (IPC):
**G06T 5/60** *(2024.01)* **G06T 5/70** *(2024.01)*

(52) Cooperative Patent Classification (CPC):
**G06T 7/0012; G06T 5/60; G06T 5/70;**
G06T 2207/10104; G06T 2207/20081;
G06T 2207/20084

(86) International application number:
**PCT/EP2022/054999**

(87) International publication number:
**WO 2022/184647 (09.09.2022 Gazette 2022/36)**

(54) **PET IMAGE ANALYSIS AND RECONSTRUCTION BY MACHINE LEARNING**

ANALYSE UND REKONSTRUKTION VON PET-BILDERN DURCH MASCHINELLES LERNEN

ANALYSE ET RECONSTRUCTION D'IMAGE DE TOMOGRAPHIE PAR ÉMISSION DE POSITRONS (TEP) À L'AIDE DE L'APPRENTISSAGE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2021 EP 21159931**

(43) Date of publication of application:
**10.01.2024 Bulletin 2024/02**

(73) Proprietor: **Aarhus Universitet
8000 Aarhus C (DK)**

(72) Inventor: **HANSEN, Thomas Mejer
8420 Knebel (DK)**

(74) Representative: **Plougmann Vingtoft a/s
Strandvejen 70
2900 Hellerup (DK)**

(56) References cited:
**US-A1- 2020 043 163 US-A1- 2020 397 334**

• **GONG KUANG ET AL: "PET Image Denoising
Using a Deep Neural Network Through Fine
Tuning", IEEE TRANSACTIONS ON RADIATION
AND PLASMA MEDICAL SCIENCES, IEEE, vol. 3,
no. 2, 1 March 2019 (2019-03-01), pages 153 - 161,
XP011712822, ISSN: 2469-7311, [retrieved on
20190301], DOI: 10.1109/TRPMS.2018.2877644**

**Description**

FIELD OF THE INVENTION

The present invention relates to image analysis and reconstruction for medical imaging by using neural networks and machine learning, and in particular to a device and a method of position emission tomography (PET) image analysis and reconstruction.

BACKGROUND OF THE INVENTION

The use of image reconstruction, enhancement and analysis are widely used on images related to medical scanners. For example, in PET scanning, a radioactive tracer is injected into a patient and it is constructed such that cancer cells will accumulate the tracer material. A PET scanner is then used to record the radioactive decay, and provide a reconstructed PET image representing the in-situ distribution of tracer intensity. A high tracer intensity can be indicative of cancer lesions.

Clinical oncology is heavily exploiting positron emission tomography (PET) searching for, monitoring and imaging tumours and metastases. In diagnostics, monitoring and research medical imaging techniques are increasingly used. PET scanning is also used as an important tool for clinical diagnosis of brain diseases and in general for mapping heart function and brain of humans.

However, the PET image is contaminated by blurring and noise, related to how the PET data has been recorded. To remove blurring and noise, and to allow analysis of features of the in situ tracer intensity, a Bayesian approach to image reconstruction can be posed as a probabilistic inverse problem.

See the reference: Tarantola, A., & Valette, B. (1982). Inverse problems= quest for information. Journal of geophysics, 50(1), 159-170.

In the Bayesian approach prior information, quantified through a prior probability distribution $\rho(\mathbf{m})$, of the expected tracer intensity is combined with a description of how well the forward response of the model fits observed data, as quantified through the likelihood function, $L(\mathbf{m})$. The general solution to the probabilistic/ Bayesian formulation of an inverse problem is a probability distribution, the posterior probability distribution $\sigma(\mathbf{m})$.

$$\sigma(\mathbf{m}) = \rho(\mathbf{m})*L(\mathbf{m}) \qquad\qquad (1)$$

Except for linear Gaussian inverse problems, an analytical description of $\sigma(\mathbf{m})$ is not feasible. Instead, Markov chain Monte Carlo based sampling methods, such as the Metropolis-Hastings algorithm, exist that allow sampling of $\sigma(\mathbf{m})$. While guaranteed to in principle sample the correct posterior probability distribution $\sigma(\mathbf{m})$, such sampling methods become both computationally expensive, to the point where they cannot be practically applied, and the results difficult to interpret.

Continuous efforts are made to increase the image quality of medical images and in particular, PET image processing methods, however improving the image quality of PET images is still desired.

US 2020/043163 and the article "PET Image Denoising Using a Deep Neural Network Through Fine Tuning" by Gong Kuang et al., 2019, disclose methods where a denoised PET image is generated by a neural network based on an input noisy PET image which implies dividing the input image into convolution patches and estimating an output for each patch. The neural network is trained based on a reference model image serving as ground truth and a simulated degraded image obtained by simulation from the model image. The reference model image is derived from a phantom (i.e. a "prior"), and the neural network is trained by comparing its output with the ground truth phantom image, i.e. by comparing the network output with the expected output.

Hence, an improved image reconstruction would be advantageous, and in particular, a more efficient and/or reliable method for image reconstruction would be advantageous.

OBJECT OF THE INVENTION

It is an object of the present invention to provide an improvement in the quality and the speed of making Bayesian image analysis and reconstruction of PET images.

In particular, it may be seen as an object of the present invention to provide a method that solves parts of the above-mentioned problems of the prior art with similar image quality and doing it faster than known Bayesian methods of medical image analysis and reconstruction to improve the detectability of tumours.

SUMMARY OF THE INVENTION

Thus, the above-described object and several other objects are intended to be obtained in a first aspect of the invention by providing a faster method for image reconstruction for medical imaging of a subject. The subject can be a human or an animal.

The invention is particularly, but not exclusively, advantageous for obtaining improved detection and identification of small tumours.

The purpose of the invention is to analyse and possible reconstruct an image scanned in a PET scanner. The PET scan, the reconstructed PET image, from here-on referred to as a PET image, $\mathbf{d}_{obs}$, can be 2-dimensional or a 3-dimensional image covering parts of a human body. In the invention, the PET image is divided into a plurality of small, localized images, hereon called subset-images, $\mathbf{d}_{sso}$. A subset-image $\mathbf{d}_{sso}$ is a localized image covering a small part of the full PET image, $\mathbf{d}_{obs}$.

A machine learning system, preferable a neural network, is in the invention used to analyse the PET image. This is done by analysing the plurality of subset-images $\mathbf{d}_{sso}$ one at a time, using the subset-image $\mathbf{d}_{sso}$ as input for the machine learning system.

To train the machine learning system training sets are made based on collecting expert data, representing $\rho(\mathbf{m})$, and use this data to create training sets for training the machine learning system to be able to improve the quality of PET scans of humans or animals and analyse the PET scan for possible cancer, by estimating properties of the posterior probability distribution $\sigma(\mathbf{m})$.

Here, we present a method, relying on machine learning. A training set for a machine learning algorithm is generated based on use of arbitrarily complex prior information, here-on referred to as the prior $\rho(\mathbf{m})$. The method is based on selecting models $\mathbf{m}$ from the prior; the models selected from the prior are used to create data-images $\mathbf{d}$, which are used as input for the machine learning system to represent the subset-images $\mathbf{d}_{sso}$.

The models $\mathbf{m}$ and the data-images $\mathbf{d}$ represents subset similar to the subset-images $\mathbf{d}_{sso}$ from the PET-image, and is therefore referred to as subset-models $\mathbf{m}_{ss}$ and subset-images $\mathbf{d}_{ss}$.

**The forward problem**

The method relies on an understanding of the physical process that generates the observed PET image, $\mathbf{d}_{obs}$, including blurring and noise. Say, the model $\mathbf{m}$ represent the in situ distribution of tracer intensity. Then the image $\mathbf{d}$, one will obtain, can be computed through the following process:

$$\mathbf{d} = g(\mathbf{m}) + n(\mathbf{m}), \qquad\qquad (2)$$

wherein 'g' represents a function that applies blurring or smoothing, according to the used scanner and reconstruction method, and 'n' represent a function that generates noise according to a specific noise model. $\mathbf{d}$ represent one example of an image that would be observed for a specific model $\mathbf{m}$.

For a localized subset-image $\mathbf{d}_{ss}$, this is

$$\mathbf{d}_{ss} = g(\mathbf{m}_{ss}) + n(\mathbf{m}_{ss}),$$

where $\mathbf{m}_{ss}$ is an in situ distribution of tracer intensity for the localized subset-image $\mathbf{d}_{ss}$.

'g' represent the blurring or smoothing introduced by using a specific type of scanner and reconstruction method, and is related to the point spread function. This is typically represented by a linear operator $\mathbf{G}_{PSF}$, such that the forward problem can be described by

$$\mathbf{d} = \mathbf{G}_{PSF}(\mathbf{m}) + n(\mathbf{m}). \qquad\qquad (3)$$

or for a localized subset-image

$$\mathbf{d}_{ss} = \mathbf{G}_{PSF}(\mathbf{m}_{ss}) + n(\mathbf{m}_{ss}).$$

In practice, a noise model can be obtained by scanning a known target and computing the residual between the obtained PET image from the PET scanner and the PET image computed through $\mathbf{G}_{PSF}(\mathbf{m})$. The residual then represents one realization of the noise, from which a statistical model of the noise can be inferred. Similarly, the averaging function $\mathbf{G}_{PSF}(\mathbf{m})$ can be obtained by analysing the residual between the obtained PET image and the known target. Typically, the averaging function and the noise model will be estimated simultaneously.

Therefore, if the subset-model $m_{ss}$ is known, a subset-image $d_{ss}$ can be calculated. However, in the invention, the subset-model $m_{ss}$ for the PET image is not known, but in the invention from the PET image, the subset-image $d_{sso}$ is known. Therefore, a method to determine the subset-model $m_{ss}$, or a characteristic of a subset-model $m_{ss}$, from the subset-image $d_{sso}$ is required. To be able to find characteristic of a subset-model $m_{ss}$ a machine learning system is generated and trained.

**The prior $\rho(m)$**

To obtain a machine learning system to solve the inverse problem starting with a PET image $d_{obs}$ and ending up with output data, the first step is to generate data for training the machine learning system. To do this the collected expert data is used to represent a prior $\rho(m)$. The prior represents prior knowledge about the model parameters. This may come from expert knowledge, previous surveys and similar sources. The output data, called the representation output, generated by the machine learning system may be an image or it may be statistical data, estimating a characteristic of the PET image.

An expert, for instance a doctor working with diagnosing cancer from PET images, can make expert data, usually in cooperation with a data specialist. The expert creates or selects, for instance, a set of images for the expert data. The images the expert selects can be images from humans showing tumours or metastases or other kinds of relevant cell structures. Based on the expert data a data specialist generates a statistical model, representing the prior information, describing the variation in these images. Alternatively, the data specialist can generate the prior from previous surveys, an assumed statistical model, or other data sources.

Methods to quantify and sample from a prior using spatial correlations is described in the references:

Deutsch, C. V., & Journel, A. G. (1992). Geostatistical software library and user's guide. New York, 119(147).
Mariethoz, G., & Caers, J. (2014). Multiple-point geostatistics: stochastic modelling with training images. John Wiley & Sons.

The prior $\rho(m)$ does not need to exist as a mathematical model (while it can) but is instead represented by the choice of algorithm and statistical model. The explicit choice of prior information is then quantified through the realizations generated by the algorithm and statistical model of choice.

**The sample M\*, model-images m\* and data-images d\***

Example images are generated as realizations of the prior and are called model-images, denoted by $m_{ss}^*$, and they form the sample **M\***. When completed the sample **M\*** comprises a large number of model-images $m_{ss}^*$, distributed according to $\rho(m)$. The sample **M\*** includes a high number of model-images $m_{ss}^*$. The sample **M\*** can include 1000 or 10000 or 100000 or any other suitable numbers of model-images $m_{ss}^*$.

$m_{ss}^*$ denotes a model-image from the sample **M\***, which is a realization from the prior. The model image $m_{ss}^*$ is in principle an image without noise or blur.

For each model-image $m_{ss}^*$ the corresponding noise-free data-image $d_{ss}^*$ is computed by evaluating the forward model (equation 3)

$$d_{ss}^* = G_{psf}(m_{ss}^*)$$

By adding noise to the data-image $d_{ss}^*$, through the noise model n, a sim-data-image $d_{ss,sim}^*$ is obtained

$$d_{ss,sim}^* = G_{psf}(m_{ss}^*) + n(m_{ss}^*).$$

$d_{ss}^*$ denotes a data-image based on the model-image $m_{ss}^*$. The data-images $d_{ss}^*$ form the data sample **D\***. The sim-data-image $d_{ss,sim}^*$ is obtained from further adding noise to the data-image $d_{ss}^*$. The sim-data-images $d_{ss,sim}^*$ form the simulated data sample $D_{sim}^*$.

A data-image $d_{ss}^*$ is a smoothed version of the original model-image $m_{ss}^*$, as quantified through the smoothing operator g or $G_{PSF}$. The data-image $d_{ss}^*$ is a representation of model-image $m_{ss}^*$ to which blur is added. The sim-data-image $d_{ss,sim}^*$ is a representation of the model-image $m_{ss}^*$ to which both blur and noise has been added.

A model-image $m_{ss}^*$ can represent $N_M$ pixels, which may be the same number of pixels as the data-image $d_{ss}^*$, the sim-data-image $d_{ss,sim}^*$ and the subset-image $d_{sso}$ represents, but also the model-image $m_{ss}$ can have more pixels than the data-image $d_{ss}^*$, the sim-data-image $d_{ss,sim}^*$, and the subset-image $d_{sso}$. That is the model-image $m_{ss}^*$ can be represented using finer or more coarse resolution than the resolution of the data-image $d_{ss}^*$ and the sim-data-image

$d_{ss,sim}$* so that the model-image $m_{ss}$* have more pixels than the data-image $d_{ss}$.

A model-image $m_{ss}$*, as well as a data-image $d_{ss}$*, a sim-data-image $d_{ss,sim}$*, and a subset-image $d_{sso}$, is a representation of a small image including 1 pixel, or 10 or 100 or 1000 or any other suitable number of pixels. The pixels can be placed in a 3-dimensional configuration for instance in an image of 9x9x9 pixels or a 2-dimensional configuration for instance in an image of 9x9 pixels.

The number of pixels represented in a model-image $m_{ss}$*, a data-image $d_{ss}$*, a sim-data-image $d_{ss,sim}$*, and a subset-image $d_{sso}$ will be denoted $n_p$. A model-image $m_{ss}$* = [$m_{ss1}$, $m_{ss2}$, ..., $m_{ssn}$] is a vector representing $n_p$ model parameters representing the real tracer intensity in the $n_p$ pixels. That is, if the model-image $m_{ss}$* represents an image of for instance 9x9 pixels, a total of 81 pixels, and the model-image $m_{ss}$* is therefore in this example a vector with $n_p$ = 81. Likewise for the subset-image $d_{sso}$, the sim-data-image $d_{ss,sim}$* and the data-image $d_{ss}$*.

Models generated from the prior are referred to as model-images $m_{ss}$*, and data-images generated from the model-images $m_{ss}$* by using the forward model, are referred to as data-image $d_{ss}$*, if they are without noise, and as sim-data-images $d_{ss,sim}$*, if they are including noise.

The set of generated sim-data images, $d_{ss,sim}$*, form the simulated data sample $D_{sim}$*. When completed the simulated data sample $D_{sim}$* comprises a large number of sim-data-images $d_{ss,sim}$*, as many as model images, denoted by $m_{ss}$*, in $M$*.

The sim-data-images $d_{ss,sim}$* are used to train a machine learning system and the trained machine learning system is then used to analyse a PET scan by estimating properties of $\sigma(m_{ss})$ from localized subset-images $d_{sso}$ of the PET scan.

## The machine learning system

When creating training sets comprising sim-data-images $d_{ss,sim}$*, a mapping is made from the sim-data-image $d_{ss,sim}$* to the model-image $m_{ss}$* or from the sim-data-image $d_{ss,sim}$* to a characteristic of the model-image $m_{ss}$*, the mapped characteristic of the model image $m_{ss}$* is an expected output $m_f$* for the machine learning system. Thereby, the training sets each comprises a sim-data-image $d_{ss,sim}$* and an expected output $m_f$*.

The expected output sample $M_f$* is the collection of all the expected outputs $m_f$*. The training data [$D_{sim}$*; $M_f$*] is the collection of all the training sets [$d_{ss,sim}$ ; $m_f$*]. The training data [$D_{sim}$*; $M_f$*] is used to train the machine learning system to learn a mapping from the simulated data sample $D_{sim}$* to the expected output sample $M_f$*.

During training the machine learning system, the characteristic expected output $m_f$* may be identical to the model-image $m_{ss}$*, but the characteristic expected output $m_f$* may also be a subset of the model-image $m_{ss}$*, for instance the intensity of the central pixel in the model-image $m_{ss}$* or a probability that the central pixel belongs to a certain category, for instance the category "cancer". The characteristic $m_f$* is the expected output from the machine learning system when the sim-data-image $d_{ss,sim}$* is the input. The expected output $m_f$* may also be a statistical function for example a normal distribution, where the expected output $m_f$* is a vector with two values, the mean and the covariance for a normal distribution for instance describing the probabilities for pixel intensities.

When the machine learning system is trained, the output $m_o$ generated by the machine learning system is compared to the expected output $m_f$*. During training the output $m_o$ are determined for all sim-data-images $d_{ss,sim}$* in the training set and compared to the expected output $m_f$*. The machine learning system is trained to minimize the difference between the output $m_o$ and the expected output $m_f$* according to a cost function $C(m_f$*, $m_o)$. When the cost function is minimized, the training is completed.

The cost function is typically chosen to represent the log-likelihood of the feature one which to estimate. If $m_f$* represent the mean and covariance, $N(m_{0f}$*, $C_f$*), for a set of pixel in a model image, then minimizing the following cost function,

$$C(m_f*, m_o) = -0.5 ( (m_{0f}*- m_o) C_f*^{-1} (m_{0f}*, m_o)' ),$$

will lead to estimation of the posterior mean and covariance of $\sigma(m_f$*). If $m_f$* represent the probability of a certain outcome, the use if the categorical cross entropy will to a lead to a full description of $\sigma(m_f$*).

An introduction of machine learning, and the use of cost functions is described e.g.:
Bishop, Christopher M. Pattern, Recognition and machine learning. Springer, 2006.

The PET image is analyzed by the machine learning system and reconstructed by analyzing each subset-image $d_{sso}$ extracted from the PET image. The trained machine learning system, when analyzing subset-images $d_{sso}$ from a PET image, is determining a mapping from each subset-images $d_{sso}$ to the subset-model $m_{ss}$, or a mapping from the subset-images $d_{sso}$ to a characteristic of the subset-model $m_{ss}$.

The trained machine learning system is receiving the subset-images $d_{sso}$ as input. The trained machine learning system evaluates the subset-images $d_{sso}$ one at a time, and for each subset-image $d_{sso}$, an output $m_o$ is generated. The output $m_o$ can represent the full subset-model $m_{ss}$, or a characteristic of the subset-model $m_{ss}$. The subset-model $m_{ss}$ may

never be determined in full, the machine learning system is determining a characteristic of the subset-model $m_{ss}$, like for instance the intensity of the central pixel, or a group of central pixels of subset-model $m_{ss}$ based on the subset-image $d_{sso}$.

The output $m_o$ may be a numerical value, which may be the intensity of a pixel, or the intensities of a group of pixels in the subset-model $m_{ss}$. The output $m_o$ may be a numerical value for the number of pixels connected to the central pixel in the subset-model $m_{ss}$, which is indicating cancer, or which have a pixel intensity higher than a threshold pixel probability.

Alternatively, the output $m_o$ may be a category, it may be in a category A, if a condition is fulfilled or in a category B, if a condition is not fulfilled, or it may be a probability that it is in category A and a probability that it is category B. The output $m_o$ may be probability values for a number of categories. There may be two or more categories, where a probability is given for each category. Category A may be the probability for "cancer" and Category B may be the probability for "no cancer".

The output $m_o$ may also represent a statistical function for example a normal distribution, where the output $m_o$ is a vector with two values, the mean and the variance for a normal distribution for instance describing the probabilities for pixel intensities. $m_o$ could also represent the mean and covariance of a multivariate normal distribution.

Thus, the described objects of the invention and several other objects are intended to be obtained in a first aspect of the invention by providing a computer-implemented method for image analysis and reconstruction for medical imaging of a subject, the method being defined in claim 1.

Each subset-image $d_{sso}$ from the PET image is now processed by the machine learning system. For each subset-image $d_{sso}$, an output $m_o$ is obtained and based on a plurality of output $m_o$ obtained for the plurality of analysed subset-images; a representation output is determined and outputted. The representation output may be an image or it may by a file of statistical data.

Accordingly, providing a trained machine learning system is comprising:

- obtaining a model-image $m_{ss}*$ from a sample $M*$, the model-image $m_{ss}*$ is a realization from a prior $\rho(m)$, the prior $\rho(m)$ is a statistical model based on expert prior data, each model-image $m_{ss}*$ is a representation of an image of one, or more, pixels,
- obtaining training sets, each training set comprises a sim-data-image $d_{ss,sim}*$ and an expected output $m_f*$, by determining the sim-data-image $d_{ss,sim}*$ based on the model-image $m_{ss}*$, and selecting the expected output $m_f*$ based on the model-image $m_{ss}*$ for each sim-data-image $d_{ss,sim}*$, each sim-data-image $d_{ss,sim}*$ is a representation of one, or more, pixels,
- applying the training sets as input for training the machine learning system, and obtaining an output $m_o$ for each sim-data-image $d_{ss,sim}*$ from the machine learning system, and
- training the machine learning system until the machine learning system converges based on comparing the outputs $m_o$ with the expected outputs $m_f*$.

The machine learning system is trained by using training sets. The training sets are generated by obtaining a sim-data-image $d_{ss,sim}*$ and an expected output $m_f*$. For each model-image $m_{ss}*$, which is a realization from the prior $\rho(m)$, a sim-data-image $d_{ss,sim}*$ is generated by the formula $d_{ss,sim}* = g(m_{ss}*) + n(m_{ss}*)$, where $g(m_{ss}*)$ may be the function $G_{psf}(m_{ss}*)$.

The sim-data-image $d_{ss,sim}*$ is used as input to training the machine learning system. Further, an expected output $m_f*$ is input to the machine learning system. The expected output $m_f*$ is generated from the model-image $m_{ss}*$ and is a characteristic of the model-image $m_{ss}*$, it may be the intensity of the central pixel, or may be a number representing a number of pixels connected to the central pixel, which is an indication a probability for cancer, or which have an pixel intensity higher than a threshold pixel intensity.

Alternatively the expected output $m_f*$ may be the posterior probability of a category derived from the model-image $m_{ss}*$. There may be a category A for the probability that the model-image $m_{ss}*$ is showing "cancer" and a category B for the probability that the model-image $m_{ss}*$ is showing "not cancer". There may be more than two categories.

The machine learning system converges when a cost function for the training sets for the machine learning system is minimized. The cost function is based on comparing the outputs $m_o$ with the expected output $m_f*$.

Typically, a part of the training data is removed, and referred to as test data set. The machine learning system is trained on the training data $[D_{sim}*; M_f*]$, and compared to performance on the test data set, in order to ensure the machine learning system will perform well on new data.

Training sets are obtained by generating model-images $m_{ss}*$ from the prior $\rho(m)$ and by using the forward model to generate sim-data-image $d_{ss,sim}*$ from the model-image $m_{ss}*$, and a training set is obtained by further generating an expected output $m_f*$ based on the model-image $m_{ss}*$. Each training set therefore comprises a sim-data-image $d_{ss,sim}*$ and a corresponding expected output $m_f*$.

The training sets may be stored in a table $[D_{sim}*; M_f*]$, which then is the training data. The table may further be saved in a data storage, for instance in a database, and may be saved for future use, so that the training data may be reused for training another machine learning system.

For instance, a table may be generated with a number of different expected outputs for each sim-data-image $d_{ss,sim}$*. So that the expected output used for training depends on what kind of analysis is required.

Accordingly, wherein providing a trained machine learning system is comprising:

- selecting the trained machine learning system from a plurality of trained machine learning systems based on the type of the output $m_o$ to be obtained.

There may be several trained machine learnings systems saved on or available to a computer, and then based on the desired output to be obtained, the computer selects which of the trained machine learning system to apply.

Accordingly, the method further is comprising that the sim-data-image $d_{ss,sim}$* is determined from the model-image $m_{ss}$* by the function of the type $d_{ss,sim}$* = $g(m_{ss}$*) + $n(m_{ss}$*), wherein g is a smoothing function and n is a noise function.

The sim-data-image $d_{ss,sim}$* for the training set is determined from the model-image $m_{ss}$* and the expected output $m_f$*, depending on which kind of output is required.

Accordingly, the method further is comprising that the selected expected output $m_f$* is the pixel intensity of the central pixel or a group of central pixels, in the model-image $m_{ss}$*, or a probability of a certain feature related to the model-image $m_{ss}$*.

One kind of expected output $m_f$* may be the pixel intensity of the central pixel in the model-image $m_{ss}$*. Alternatively, the expected output $m_f$* may be from a central group of pixels in the model-image $m_{ss}$*. For instance if the model-image $m_{ss}$* is comprising 9x9 pixels, the expected output $m_f$* may be the nine central pixel forming a 3x3 matrix around the central pixel. In this case, the expected output $m_f$* may be a vector of nine pixel intensities.

Accordingly, the method further is comprising that the selected expected output $m_f$* is the number of pixels connected to the central pixel with an intensity higher than a threshold intensity value or a probability of a disease, for instance cancer, higher than a threshold probability value.

The expected output $m_f$* may for example be the number of pixels connected to the central pixel having a pixel intensity of more than 12, when the intensity is given as a value between 0 and 20.

Accordingly, the method further is comprising that the expected output $m_f$* is the category of the central pixel, or a group of pixels, in the model-image $m_{ss}$* or the expected output $m_f$* is a probability for one or more categories.

The expected output $m_f$* may be a vector of one or more categories where a category A for instance may be the probability that the model-image $m_{ss}$* represent cancer and a category B may be the probability that the model-image $m_{ss}$* do not represent cancer.

Accordingly, the method further is comprising that the expected output $m_f$* (21) is a vector with two values, the mean and the covariance for a normal distribution.

## Representation outputs

When a plurality of the subset-images $d_{sso}$ has been processed by the machine learning system, then the plurality of outputs $m_o$, one output $m_o$ for each subset-images $d_{sso}$, from the machine learning system are used to determine representation outputs of the data.

Accordingly, determining a representation output comprises ordering the outputs $m_o$ according to the location of the subset-images $d_{sso}$ in the original PET scan.

Accordingly, the method further is comprising that the output $m_o$ is a numerical value like a pixel intensity, or a mean value and covariance for a number of pixels, or a number of pixels or the expected output $m_o$ is a category or a probability for one or more categories.

The output $m_o$ of the machine learning system may be a pixel intensity for one pixel, or it may be pixel intensities for several pixels, for instance the 9 central pixels. Alternatively, the output $m_o$ may be a mean value and a covariance for a number of pixels. The output $m_o$ may be a number of pixels for how many pixels have an intensity higher than a threshold intensity. The output $m_o$ may be a category, for instance the category "cancer" or a category "not cancer". $m_o$ may be a single value or it may be a vector of two or more values. For instance, the output $m_o$ may be a vector with probabilities for two or more categories.

If the outputs $m_o$ is a numerical value, for instance a pixel intensity or the mean pixel intensity, the outputs can be used to generate an image of higher quality of the original PET scan, a cleaned up version of the PET scan.

Accordingly, the method further is comprising that the outputs $m_o$ are ordered into a representation output.

Obviously, the representation output can be determined in many different ways by using many different statistical calculation methods.

If the outputs $m_o$ is an intensity value, then a cleaned up version of the PET scan can be constructed. This cleaned up image is the model $m_{restore}$ and is the solution to the inverse problem of constructing a cleaned up image form the original PET image $d_{obs}$.

If the outputs $\mathbf{m}_o$ is a number of how many pixels with high probability of cancer is connected, representing the volume/area of a cancer lesion, then an representation output will be created where many connected pixels with high cancer probability will be darker in the representations output image than when only few pixels are connected or only a single pixel are having a high cancer probability. The same will be the case if the outputs $\mathbf{m}_o$ is a number of how many pixels with high intensity is connected.

When the output $\mathbf{m}_o$ is categories, the output $\mathbf{m}_o$ may be a vector with two or more numbers; the numbers may be a probability for each category. Then a representation output may be made for probability for one of the categories. If the category is the probability of cancer, a representation output image is made with a dark pixel for high probability and less dark pixel for lower probabilities and a white pixel in case the probability is zero. Such a representation output is emphasizing the risk of cancer.

When the subset-image $\mathbf{d}_{sso}$ is selected from the PET image, not only a single pixel is chosen, but a group of pixels. This is because using $\mathbf{G}_{PSF}$ the pixel intensity for a single pixel is dependent on the intensity and noise of the neighbor pixels, therefore some rows of neighbor pixels are needed for getting the right result for the single pixel. Therefore, a method to make subset-images $\mathbf{d}_{sso}$ by moving the frame around the subset-image $\mathbf{d}_{sso}$ only one pixel at a time, making a subset-image $\mathbf{d}_{sso}$ for each pixel in the PET image, so the subset-image $\mathbf{d}_{sso}$, for instance, can be 9x9 pixels. The centre pixel is surrounded by the neighbour pixels in the subset-image $\mathbf{d}_{sso}$, but when the subset-image $\mathbf{d}_{sso}$ is analyzed for instance only the intensity of the center-pixel of the corresponding subset-model $\mathbf{m}_{ss}$ is used and the other 80 pixels around the center pixel is ignored. The output $\mathbf{m}_f{}^*$ may be the intensity of the central pixel of the subset-model $\mathbf{m}_{ss}$ and the representation output image is then put together with all the central pixel values of the subset-models $\mathbf{m}_{ss}$ ordered in the same order as the subset-images $\mathbf{d}_{sso}$ in the original PET image to form a cleaned up PET image.

For a subset-image of 9x9 pixels, the calculation gives the correct center pixel value in the given case. Using a larger subset-image, more of the center pixel can be used, and hence potentially lead to increased efficiency. Increased efficiency will depend on the increased computational demands to set up and train the machine learning system.

Accordingly, the machine learning system comprises a regression type mapping, when the expected output $\mathbf{m}_f{}^*$ represent a numerical value, or a classification type mapping, when the expected output $\mathbf{m}_f{}^*$ represent a category.

When creating the machine learning system by using a neural network, the last layer in the neural network differs depending on whether the expected output $\mathbf{m}_f$ refer to a continuous value, for instance pixel intensity, or whether it refer to discrete parameter, or the probability value for a specific category. When a continuous value is required, the last layer is a regression layer. When probabilities for different categories are required, the last layer is a classification layer.

Accordingly, the machine learning system comprises a neural network.

The machine learning system preferable is a neural network, but may alternatively be decision trees or support vector machines or any other machine learning algorithm able to learn the mapping from $\mathbf{D}_{sim}{}^*$ to $\mathbf{M}_f{}^*$.

Specifically the machine learning system may be using a feed forward neural network, consisting of a number of layers, where the input layer consist of a number of neurons corresponding to the number of parameters in the subset-image $\mathbf{d}_{sso}$, which more specific is the number of pixels in the subset-image $\mathbf{d}_{sso}$, each pixel represented by the pixel intensity. In principle, any network architecture can be used as long is the input layer reflect s the subset-image $\mathbf{d}_{sso}$, and the output layer reflect the expected output $\mathbf{m}_f{}^*$.

The output layer consist of one or more neurons, one for each element in the output $\mathbf{m}_o$. The output layer may be a single neuron with the value of the output $\mathbf{m}_o$, or it may be two or more neurons, each representing a category and is a probability value for the given category. The number of layers in the neural network depends on which output is required. The number of layers and nodes is selected high enough that the mapping between the subset-image $\mathbf{d}_{sso}$ and the expected output $\mathbf{m}_f$ can be resolved, and low enough that training of the network does not lead overfitting of the training data.

Back propagation is used to calculate weights and biases for the neural network and the ADAM algorithm can, for example, be used for changing weights and biases. The ADAM algorithm is a standard optimization algorithm available for instance through tensorflow.

Kingma, Diederik P., and Jimmy Ba. "Adam: A method for stochastic optimization." arXiv preprint arXiv:1412.6980 (2014).

The invention relates to a computer program product comprising at least one computer having data storage means in connection therewith, and the computer program comprising instructions which, when the program is executed by a computer, cause the computer to carry out the steps of the method of the image reconstruction.

Accordingly, to another aspect of the invention, the invention relates to a medical imaging system comprising a scanner (112) and a control system (111) for scanning and recording a PET image, and a processor, the system being defined in claim 11.

Further, accordingly to this third aspect of the invention, the invention relates to a medical imaging system, wherein the processor is further configured to provide a trained machine learning system by:

- obtaining a model-image $\mathbf{m}_{ss}{}^*$ from a sample $\mathbf{M}^*$, the model-image $\mathbf{m}_{ss}{}^*$ is a realization from a prior $\rho(\mathbf{m})$, the prior $\rho$

(**m**) is a statistical model based on expert prior data, each model-image $\mathbf{m}_{ss}$* is a representation of an image of one, or more, pixels,

- obtaining training sets, each training set comprises a sim-data-image $\mathbf{d}_{ss,sim}$* and an expected output $\mathbf{m}_f$*, by determining the sim-data-image $\mathbf{d}_{ss,sim}$* based on the model-image $\mathbf{m}_{ss}$*, and selecting the expected output $\mathbf{m}_f$* based on the model-image $\mathbf{m}_{ss}$* for each sim-data-image $\mathbf{d}_{ss,sim}$*, each sim-data-image $\mathbf{d}_{ss,sim}$* is a representation of one, or more, pixels,
- applying the training sets as input for training the machine learning system, and obtaining an output $\mathbf{m}_o$ for each sim-data-image $\mathbf{d}_{ss,sim}$* from the machine learning system, and
- training the machine learning system until the machine learning system converges based on comparing the outputs $\mathbf{m}_o$ with the expected outputs $\mathbf{m}_f$*.

In an aspect of the invention, the invention relates to a computer program product being adapted to enable a computer system comprising at least one computer having data storage means in connection therewith to control a medical image system, such as a computer program product comprising instructions which, when the program is executed by a computer, cause the computer to carry out the method of the invention.

This aspect of the invention is particularly, but not exclusively, advantageous in that the present invention may be accomplished by a computer program product enabling a computer system to carry out the operations of the method of the image reconstruction of the invention when down- or uploaded into the computer system. Such a computer program product may be provided on any kind of computer-readable medium, or through a network.

The individual aspects of the present invention may each be combined with any of the other aspects, as long as covered by the claims. These and other aspects of the invention will be apparent from the following description with reference to the described embodiments.

BRIEF DESCRIPTION OF THE FIGURES

The method according to the invention will now be described in more detail with regard to the accompanying figures. The figures show one way of implementing the present invention and is not to be construed as being limiting to other possible embodiments falling within the scope of the attached claim set.

Fig. 1 illustrates a schematic drawing of a medical imaging system.

Fig. 2a and 2b illustrates a 2D observed PET image and a subset-image from the PET image.

Fig. 3 illustrates when the machine learning system is running, it takes subset-images $\mathbf{d}_{sso}$ as input and the output is the outputs $\mathbf{m}_o$.

Fig. 4 illustrates the forward model by a reference model $\mathbf{m}_{ref}$, a smoothed model, and the a smoothed model with noise, representing a PET image.

Fig. 5 illustrates how to generate model-images $\mathbf{m}_{ss}$* from expert data.

Fig. 6 illustrates how to generate a training set.

Fig. 7 illustrates training the machine learning system.

Fig. 8 illustrates an example of six training sets for training the machine learning system for three different features.

Fig. 9 illustrates another example of six training sets for training the machine learning system.

Fig. 10 illustrates a classification neural network using multilayer perception (MLP).

Fig. 11 illustrates another possible neural network implementation for the invention using a Convolutional Neural Network (CNN).

Fig. 12a and 12b illustrates two possible representation output images based on the PET image in fig. 2a, obtained using a MLP and CNN.

Fig. 13a and 13b illustrates the determination of the pixel intensity for a single pixel in the ideal reference model $\mathbf{m}_{ref}$.

Fig. 14 illustrates the representation output image obtained using a CNN neural network and the representation output image obtained using a MLP neural network.

Fig. 15 illustrates representation output images when the output $\mathbf{m}_o$ comprise two values, a mean and a covariance so that the output $\mathbf{m}_o$ represents a normal distribution.

The figures show one way of implementing the present invention and is not to be construed as being limiting to other possible embodiments falling within the scope of the attached claim set.

DETAILED DESCRIPTION OF AN EMBODIMENT

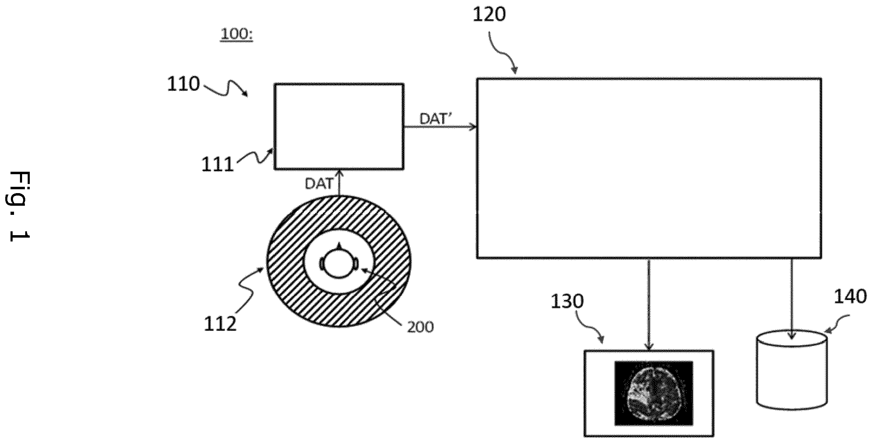

Fig. 1 is a schematic drawing of a medical imaging system 100 in an aspect of the present invention. The system 100 comprises a scanning system 110, capable of obtaining data representative of a contrast agent concentration as a function of time of an injected contrast agent into a human 200, whose head is schematically seen in a cross-sectional view. One or more parts of the human can be imaged, e.g. the brain. The system comprises a PET scanner 112 and a corresponding measurement and control system 111. The scanner obtains primary data DAT which are communicated to the measurement and control system 111, where further processing resulting in secondary data DAT' being communicated to a processor 120.

In the processor 120, a method for estimating perfusion indices for the human 200 is implemented using the obtained data DAT and DAT' representative of a contrast agent concentration as a function of time of an injected contrast agent.

The processor may be operably connected to a display device 130, such as a computer screen or a monitor, to enable showing an image of the resulting PET image as schematically indicated. Alternatively, or additionally, the PET image may be communicated to a storage device 140 of any suitable kind for later analysis and diagnostic purposes.

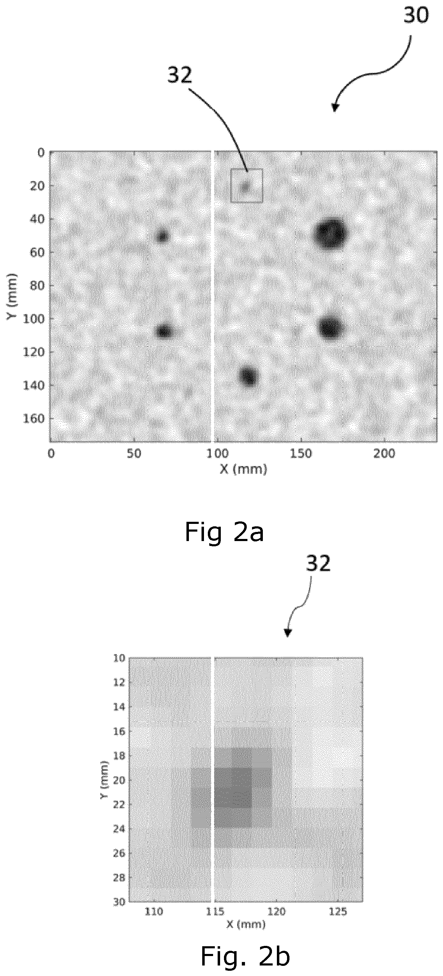

Fig. 2a shows a 2D PET image, as output from a PET scanner. The 2D PET image is an example of a PET image 30. On Fig. 2b one subset-images $\mathbf{d}_{sso}$ 32 is shown in a marked square where each tracer intensity of the subset-images $\mathbf{d}_{sso}$ 32 is shown as a pixel representing the tracer intensity. This subset-image $\mathbf{d}_{sso}$ 32 representation has 11x11 pixels. According to the method of the invention, the PET image 30 is divided into a plurality of subset-images $\mathbf{d}_{sso}$ 32. In the preferred embodiment a subset-image may be created for each pixel in the PET image, so that each pixel will be the central pixel in a subset-image $\mathbf{d}_{sso}$ 32 surrounded by the neighbor pixels to form a subset-image $\mathbf{d}_{sso}$ 32, which may be a 11x11 pixels image as shown in fig. 2b.

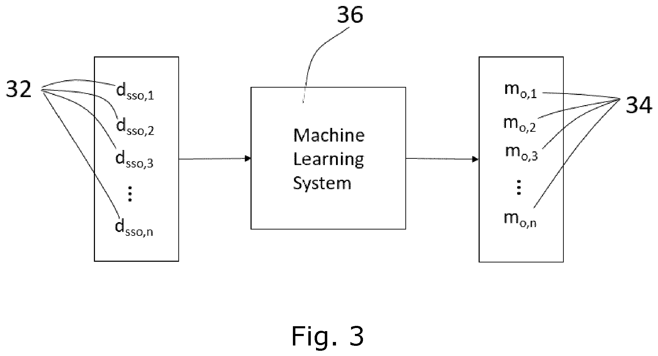

Fig. 3 illustrates that when the machine learning system 36 is running, it takes subset-images $\mathbf{d}_{sso}$ 32 as input and outputs the outputs $\mathbf{m}_o$ 34. The machine learning system 36 analyses one subset-image $\mathbf{d}_{sso}$ 32 at a time and outputs an output $\mathbf{m}_o$ 34. The subset-images $\mathbf{d}_{sso}$ 32 and the output $\mathbf{m}_o$ 34 are ordered, it may be in a table or in a database, according to the location of the subset-image $\mathbf{d}_{sso}$ in the original PET image so that the outputs $\mathbf{m}_o$ can be arranged to form a representation output image.

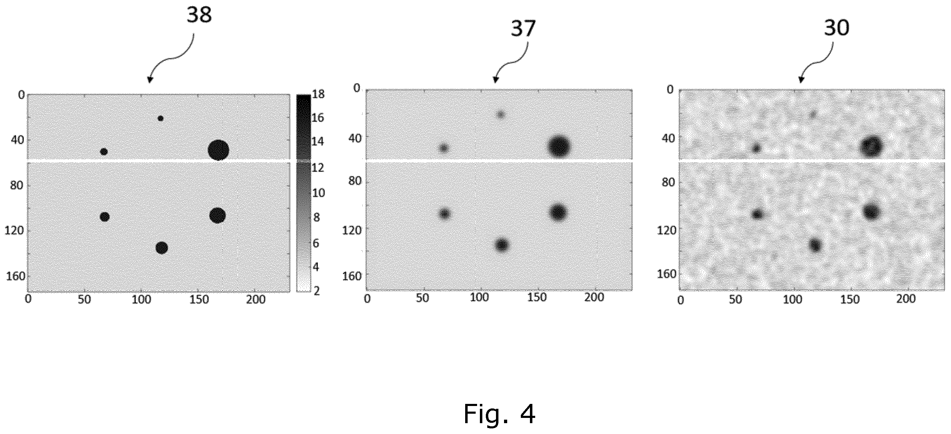

Fig. 4 illustrates the forward model. The image 38 in fig. 4 is an example of a reference model $\mathbf{m}_{ref}$ 38 for the PET image $\mathbf{d}_{obs}$ 30. The reference model is the image as it would look like completely without noise or blur. The image 37 shows the forward response $\mathbf{d}_{ref} = \mathbf{G}_{psf}(\mathbf{m}_{ref})$. The image 30 is the PET image $\mathbf{d}_{obs}$, which is a realisation of the noise model $\mathbf{d}_{obs} = \mathbf{G}_{psf}(\mathbf{m}_{ref}) + n(\mathbf{m}_{ref})$.

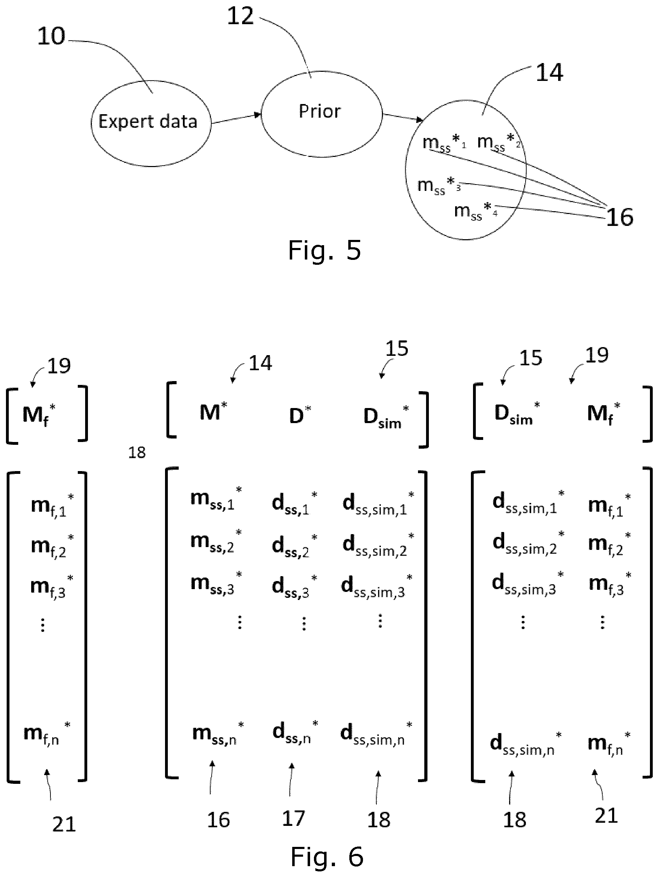

Fig. 5 illustrates how to generate model-images $\mathbf{m}_{ss}*$ 16 from expert data 10. When generating a training set, the prior $\rho(\mathbf{m})$ 12 is generated based on expert data 10, the sample $\mathbf{M}*$ 14 is created from the prior $\rho(\mathbf{m})$ 12 containing model-images $\mathbf{m}_{ss}*$ 16 which is realizations from the prior $\rho(\mathbf{m})$ 12.

Fig. 6 illustrates how to generate a training set. From the model-images $\mathbf{m}_{ss}*$ 16 in the sample $\mathbf{M}*$ 14, a data-image $\mathbf{d}_{ss}*$ 17 and a simulated sim-data-image $\mathbf{d}_{ss,sim}*$ 18 is determined, which is done by the functions $\mathbf{d}_{ss}* = g(\mathbf{m}_{ss}*)$ and $dss,sim* = g(\mathbf{m}_{ss}*) + n(\mathbf{m}_{ss}*)$. From the model-images $\mathbf{m}_{ss}*$ 16 also expected outputs $\mathbf{m}_f*$ 21 are determined. A sim-data-image $\mathbf{d}_{ss,sim}*$ 18 and an expected output $\mathbf{m}_f*$ 21 is forming a training set. The training sets may be saved in a table with two columns the simulated data sample $\mathbf{D}_{sim}*$ 15 and the expected output sample $\mathbf{M}_f*$ 19 as shown in fig. 4, alternatively the training sets may be saved in a database or in another kind of data storage. It is also possible to generate alternative expected outputs, which then for example may be saved in additional columns in the table.

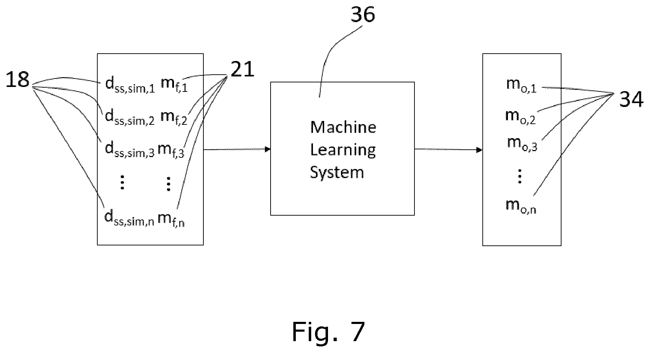

Fig. 7 illustrates training the machine learning system 36. The sim-data-images $\mathbf{d}_{ss,sim}*$ 18 and an expected outputs $\mathbf{m}_f*$ 21 are the training data used to train the machine learning system. The output is the output $\mathbf{m}_o$. The accuracy of the training is determined by comparing the output $\mathbf{m}_o$ with the expected outputs $\mathbf{m}_f*$. If the accuracy is sufficient, and converges, then the training is completed. Otherwise, the training is continuing by changing the weights and the bias for the nodes in the neural network and running the training again.

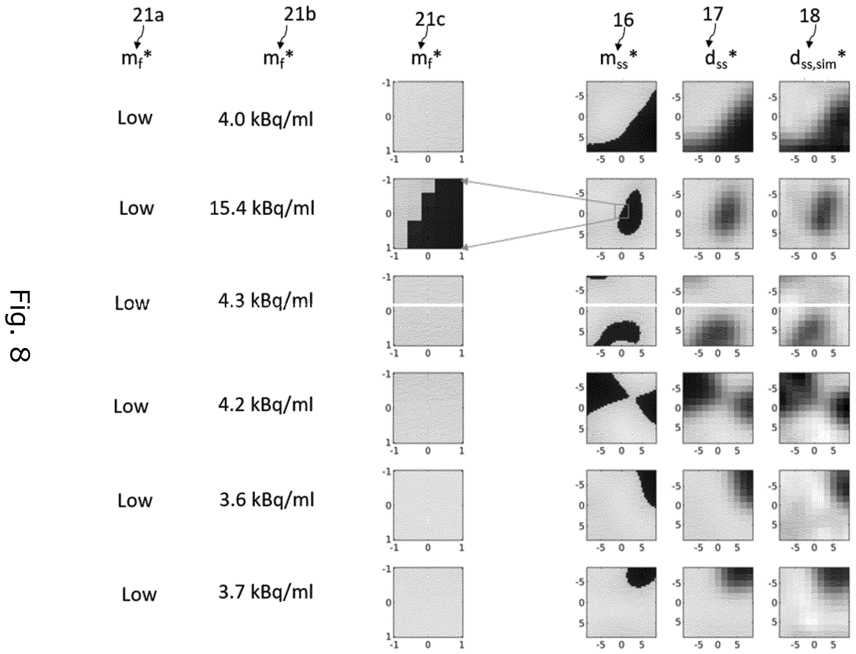

Fig. 8 illustrates an example of six training sets for training the machine learning system, the training sets has been obtained by selecting model-images $\mathbf{m}_{ss}*$ 16 from the sample $\mathbf{M}*$, which has been sampled from the prior $\rho(\mathbf{m})$. The data-images $\mathbf{d}_{ss}*$ 17 are obtained from the model-images $\mathbf{m}_{ss}*$ 16 by the formula $\mathbf{d}_{ss}* = G_{psf}(\mathbf{m}_{ss}*)$, and sim-data-images

$d_{ss,sim}$* are obtained by the formula $d_{ss,sim}$* = $G_{psf}(m_{ss}$*) + n($m_{ss}$*). The sim-data-images $d_{ss,sim}$* are then used as input for training of the machine learning system. For the training also an expected output $m_f$* is obtained. In fig. 8 three examples of expected outputs $m_f$* (21a, 21b, 21c) are shown. In the first column the expected output $m_f$* (21a) is a category, which can be either "high" or "low" depending on the intensity of the central pixel. In the second column the expected output $m_f$* (21b) is an intensity value for the intensity of the central pixel in the model-image $m_{ss}$*. In the third column the expected output $m_f$* (21c) is 25 central pixels in the model-image $m_{ss}$* corresponding to one pixel in the data-image $d_{ss}$* and the sim-data-image $d_{ss,sim}$*. This is to be understood as the expected output $m_f$* is a vector of 25 intensity values representing the 25 central pixels in the model-image $m_{ss}$*. The number of pixels in the data-image $d_{ss}$* and the sim-data-image $d_{ss,sim}$* are reduced to minimize calculation time. But still the central pixels 25 in the model-image $m_{ss}$* may be the expected output $m_f$*.

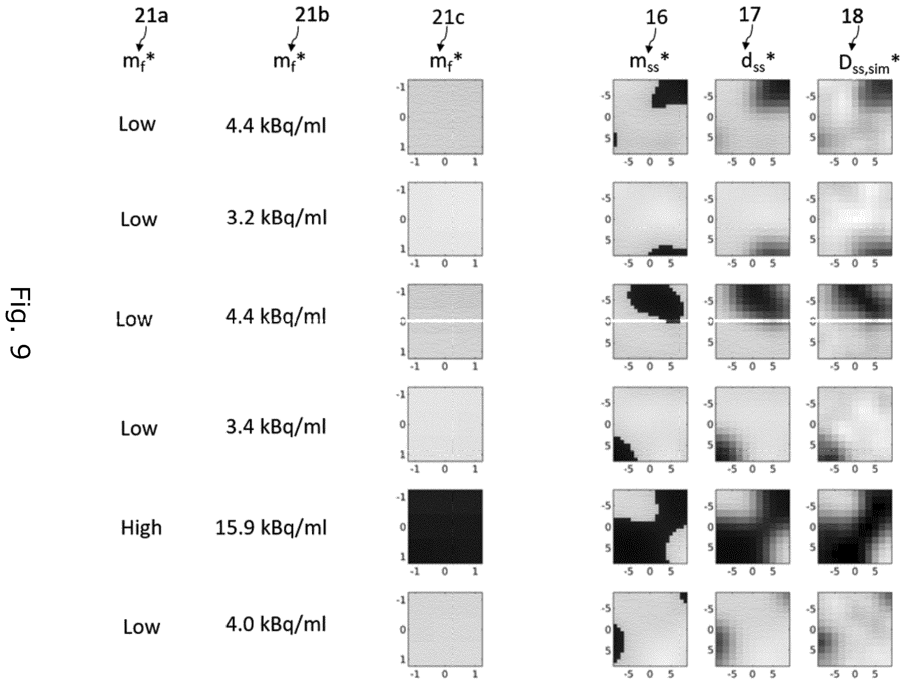

Fig. 9 shows further six training sets for training the machine learning system. In this case the pixels in the data-image $d_{ss}$* and the sim-data-image $d_{ss,sim}$* are each representing four pixels in the model-image $m_{ss}$*. Further the expected output $m_f$* vector 21c is a vector of nine central pixels in the model-image $m_{ss}$*.

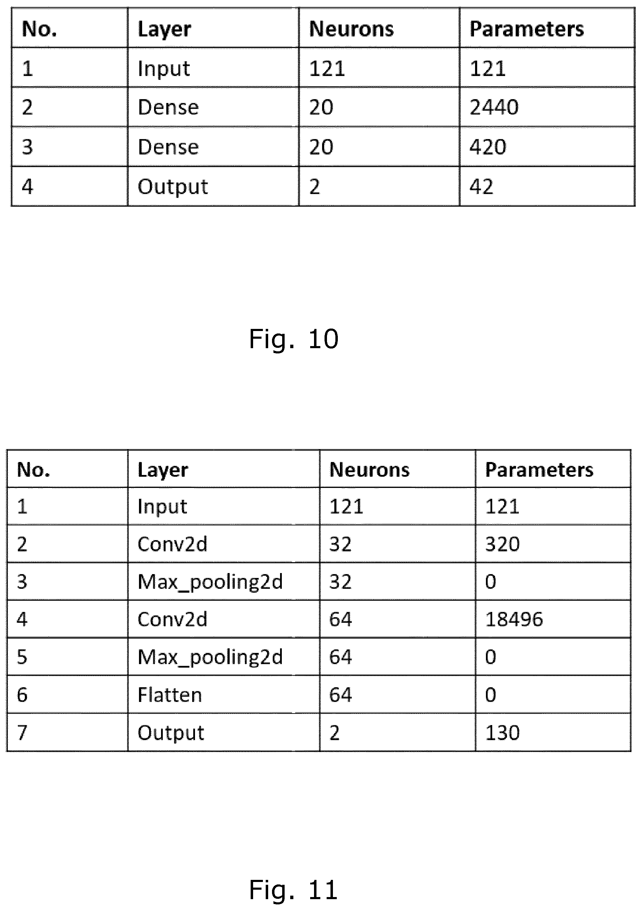

Fig. 10 illustrates a classification neural network using multilayer perception (MLP); this is one possible network configuration for the presented invention. The network comprises four layers; the first layer is the input layer, which in this case is a layer with 121 neurons. The input is the pixel intensities for each pixel in a subset-image $d_{sso}$ with 11x11 pixels, which gives 121 pixel intensities. Each neuron in the input player represent a pixel of the subset-image $d_{sso}$ and receives therefore an intensity value as input. Then the neural network comprises two hidden layers, layers 2 and 3, which each is a dense-layer of each 20 neurons, and the last layer is the output layer comprising two neurons, one neuron gives the probability for a first class, the other the probability for a second class. The first class may be the probability for cancer; the second class may be the probability for not cancer. The fourth column gives the no. of parameters used, and in total 2.902 parameters are used in this implementation.

Fig. 11 illustrates another possible neural network implementation for the invention using a Convolutional Neural Network (CNN). This is also a classification neural network; this neural network has seven layers. The first layer is the input layer, which also in this case comprises 121 neurons for pixel intensities in a subset-image $d_{sso}$ with 11x11 pixels. The second layer is a folding layer (conv2d) with 32 neurons; the third layer is a pooling layer (max_pooling2d) with 32 neurons. The fourth layer is another folding layer (conv2d); this folding layer has 64 neurons. The firth layer is a pooling layer (max_pooling2d) with 64 neurons. The sixth layer is a flatten layer with 64 neurons, and finally the last layer is an output layer with two neurons, each neuron representing the probability of a class, like in fig. 10. The fourth column gives the no. of parameters used, and in total 18.946 parameters are used in this implementation.

The implementations in fig. 10 and 11 are using standard routines, conv2d, Max_pooling2d, Flatten, and Dense for building neural networks. What is important for the invention is not how the specific neural network is build, as many different kinds of neural network can be used. Important for the application here is the input and output layers, as well as the used cost function.

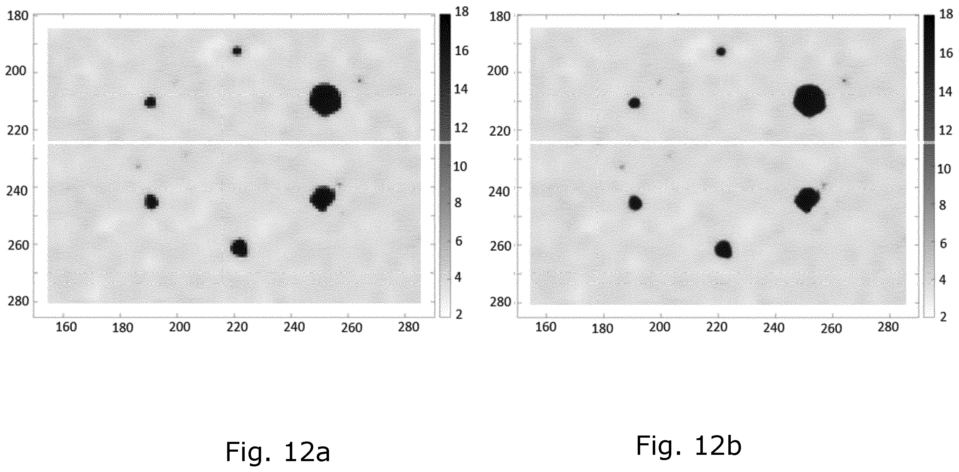

Fig. 12a and 12b illustrates two possible representation output images based on the PET image in fig. 2a. Fig. 12a shows a 1-1 representation, where each pixel in fig. 12a represent a pixel in fig. 2a. In Fig. 12b, each pixel in fig. 2a is represented by 16 pixels, a 4x4 square in fig. 12 b. This is in the case where the resolution of the model-images $m_{ss}$* is 16 times the resolution in the PET image.

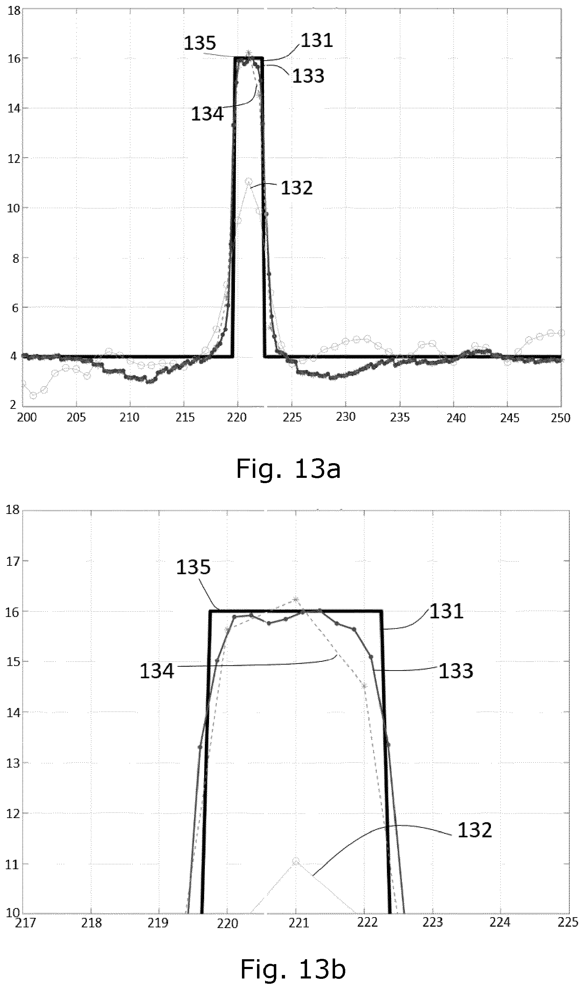

Fig. 13a and 13b illustrates the determination of the pixel intensity 135 for the smallest high intensity region in the ideal reference model $m_{ref}$. Fig 13b is a enlarged figure of a part of fig. 13a. Fig 13a and 13b show a profile along the x-axis, for y=193 at Figure 12a and 12b. The ideal pixel value is illustrated by the line 131 and the line 132 illustrates the pixels values in the PET image $d_{obs}$. The pixel have a pixel intensity of 16 kBq/ml in the blurless and noiseless ideal reference model, but only about 10 kBq/ml in the original PET image with blur and noise. By the method of this invention the pixel intensity is determined according to line 133 for a machine learning system running with a finer scale than used in the PET image and according to line 134 for a machine learning system running with the same scale as is used in the PET image, showing that the result of the analysis of the machine learning systems are close to the pixel value of the ideal reference model.

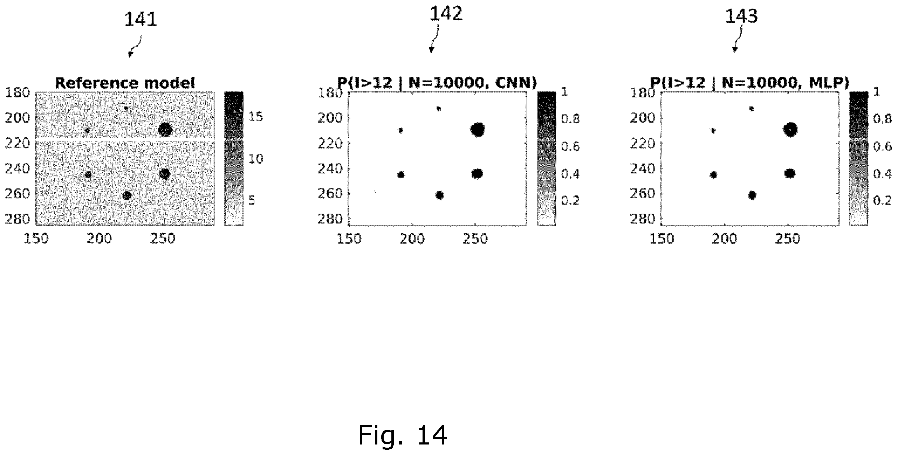

Fig. 14 illustrates the representation output 142 obtained using a CNN neural network and the representation output 143 obtained using a MLP neural network. The figure 141 is the ideal reference model $m_{ref}$, which is the PET image $d_{obs}$ without blur an noise, showing that similar results are achieved whether using CNN neural network or using MLP neural network.

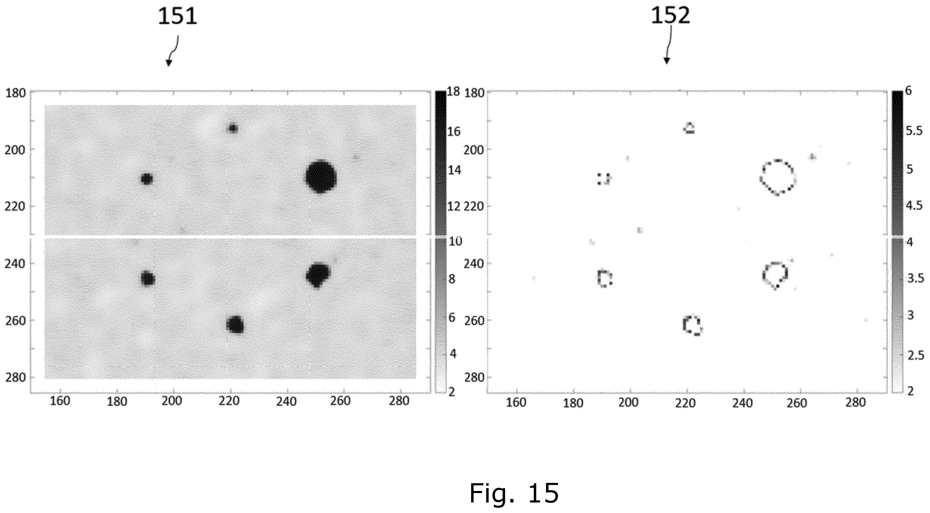

Fig. 15 illustrates representation output images when the output $m_o$, for each subset-image $d_{sso}$, comprise two values, a mean and a variance so the output $m_o$ represents a normal distribution. The image 151 illustrates the mean for the plurality of outputs $m_o$ for the plurality of subset-image $d_{sso}$; each pixel in the image represents the mean for one output $m_o$. The image 152 illustrates the corresponding variance for the plurality of outputs $m_o$.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is not possible and advantageous.

**Symbols:**

| | |
|---|---|
| $\mathbf{m}$ | A model or a model-image |
| $\mathbf{d}$ | A data-image related to $\mathbf{m}$ by $\mathbf{d}$ = g($\mathbf{m}$) + n($\mathbf{m}$) |
| $\mathbf{d}_{obs}$ | The PET image |
| $\mathbf{m}_{restore}$ | The model without noise or blur derived from the PET image |
| $\mathbf{m}_{ref}$ | The ideal reference model |
| $\mathbf{d}_{ref}$ | The ideal data-image dertermined from $\mathbf{m}_{ref}$ |
| $\mathbf{m}_{ss}$ | A subset-model, which is a subset of a larger model-image |
| $\mathbf{d}_{ss}$ | A subset-image, which is a subset of a larger data-image |
| $\mathbf{d}_{sso}$ | A subset-image, which is one of a plurality of subset-images from the PET image. A subset-image is a data-image, which is a subset of the PET image. |
| $\mathbf{m}_{ss}^*$ | A model-image, which is a realizations of the prior $\rho(\mathbf{m})$ |
| $\mathbf{d}_{ss}^*$ | A data-image, determined from $\mathbf{m}_{ss}^*$ by $\mathbf{d}_{ss}^*$ = g($\mathbf{m}_{ss}^*$) |
| $\mathbf{d}_{ss,sim}^*$ | A sim-data-image, determined from $\mathbf{m}_{ss}^*$ by $\mathbf{d}_{ss,sim}^*$ = g($\mathbf{m}_{ss}^*$) + n($\mathbf{m}_{ss}^*$) |
| $\mathbf{m}_f^*$ | expected output from the machine learning system during training |
| $\mathbf{m}_o$ | output from the machine learning system |
| $\mathbf{M}^*$ | The sample of $\mathbf{m}_{ss}^*$ |
| $\mathbf{D}^*$ | The data sample of $\mathbf{d}_{ss}^*$ |
| $\mathbf{D}_{sim}^*$ | The simulated data sample of $\mathbf{d}_{ss,sim}^*$ |
| $\mathbf{M}_f^*$ | The expected output sample |

**References:**

Tarantola, A., & Valette, B. Inverse problems= quest for information. Journal of geophysics, 50(1), 159-170 (1982).
Deutsch, C. V., & Journel, A. G. Geostatistical software library and user's guide. New York, 119(147) (1992).
Mariethoz, G., & Caers, J. Multiple-point geostatistics: stochastic modeling with training images. John Wiley & Sons (2014).
Bishop, Christopher M. Pattern, Recognition and machine learning. Springer (2006).
Kingma, Diederik P., and Jimmy Ba. "Adam: A method for stochastic optimization." arXiv preprint arXiv:1412.6980 (2014).

**Claims**

1. A computer-implemented method for image analysis and reconstruction for medical imaging of a subject, the method is comprising:

   - obtaining a PET image (30) and dividing the PET image (30) into a plurality of subset-images $\mathbf{d}_{sso}$ (32), each subset-image $\mathbf{d}_{sso}$ (32) is a representation of one, or more, pixels,
   - providing a trained machine learning system (36),

- applying the subset-images $d_{sso}$ (32) as input for the trained machine learning system (36),
- obtaining an output $m_o$ (34) for each subset-image $d_{sso}$ (32) from the trained machine learning system,
- determining and outputting a representation output (38) based on the outputs $m_o$ (34);
wherein providing a trained machine learning system (36) is comprising:

- obtaining a model-image $m_{ss}*$ (16) from a sample $M*$ (14), the model-image $m_{ss}*$ (16) is a realization from a prior $\rho(m)$ (12), the prior $\rho(m)$ (12) is a statistical model based on expert prior data, each model-image $m_{ss}*$ (16) is a representation of an image of one, or more, pixels,
- obtaining training sets, each training set comprises a sim-data-image $d_{ss,sim}*$ (18) and an expected output $m_f*$ (21), by determining the sim-data-image $d_{ss,sim}*$ (18) based on the model-image $m_{ss}*$ (16), and selecting the expected output $m_f*$ (21) based on the model-image $m_{ss}*$ (16) for each sim-data-image $d_{ss,sim}*$ (18), each sim-data-image $d_{ss,sim}*$ (18) is a representation of one, or more, pixels,
- applying the training sets as input for training the machine learning system (36), and obtaining a output $m_o$ (34) for each sim-data-image $d_{ss,sim}*$ (18) from the machine learning system, and
- training the machine learning system until the machine learning system converges based on comparing the outputs $m_o$ (34) with the expected outputs $m_f*$ (21);

**characterized in that**
the sim-data-image $d_{ss,sim}*$ (18) is determined from the model-image $m_{ss}*$ (16) by the function of the type $d_{ss,sim}*$ = $g(m_{ss}*) + n(m_{ss}*)$, wherein g is a smoothing function and n is a noise function.

2. A computer-implemented method for image analysis and reconstruction according to claim 1, wherein providing a trained machine learning system (36) is comprising:

- selecting the trained machine learning system (36) from a plurality of trained machine learning systems based on the type of the output $m_o$ (34) to be obtained.

3. A computer-implemented method for image analysis and reconstruction according to any of the claims 1-2, wherein the selected expected output $m_f*$ (21) is the pixel intensity of the central pixel, or a group of central pixels in the model-image $m_{ss}*$ (16).

4. A computer-implemented method for image analysis and reconstruction according to any of the claims 1-2, wherein the selected expected output $m_f*$ (21) is the number of pixels connected to the central pixel in the model-image $m_{ss}*$ (16) with an intensity higher than a threshold intensity value or a probability of a disease, for instance cancer, higher than a threshold probability value.

5. A computer-implemented method for image analysis and reconstruction according to any of the claims 1-2, wherein the expected output $m_f*$ (21) is a category of the central pixel, or a group of central pixels, in the model-image $m_{ss}*$ (16) or the expected output $m_f*$ is a probability for one or more categories.

6. A computer-implemented method for image analysis and reconstruction according to any of the claims 1-2, wherein the expected output $m_f*$ (21) is a vector with two values, the mean and the covariance for a normal distribution.

7. A computer-implemented method for image analysis and reconstruction according to any of the preceding claims, wherein the output $m_o$ (34) is a numerical value like a pixel intensity or a mean value and a covariance for a number of pixels, or a number of pixels, or the expected output $m_o$ is a category or a probability for one or more categories.

8. A computer-implemented method for image analysis and reconstruction according to any of the preceding claims, wherein the outputs $m_o$ (34) are ordered into a representation output (38).

9. A computer-implemented method for image analysis and reconstruction according to any of claims 1-8, wherein the machine learning system (36) comprises a regression type mapping, when the expected output $m_f*$ (21) represent a numerical value, or a classification type mapping, when the expected output $m_f*$ represent a category.

10. A computer-implemented method for image analysis and reconstruction according to any of the preceding claims, wherein the machine learning system (36) comprises a neural network.

11. A medical imaging system comprising a scanner (112) and a control system (111) for scanning and recording a PET image, and a processor (120), wherein the processor is configured to

- obtain the PET image (30) and dividing the PET image (30) into a plurality of subset-images $\mathbf{d}_{sso}$ (32), each subset-image $\mathbf{d}_{sso}$ (32) is a representation of one, or more, pixels,
- provide a trained machine learning system (36), and apply the subset-images $\mathbf{d}_{sso}$ (32) is the input for the trained machine learning system (36),
- obtain a output $\mathbf{m}_o$ (34) for each subset-image $\mathbf{d}_{sso}$ (32) from the machine learning system,
- determine and output a representation output (38) based on the output $\mathbf{m}_o$;

wherein provide a trained machine learning system (36) is comprising:

- obtain a model-image $\mathbf{m}_{ss}{}^*$ (16) from a sample $\mathbf{M}^*$ (14), the model-image $\mathbf{m}_{ss}{}^*$ (16) is a realization from a prior $\rho(\mathbf{m})$ (12), the prior $\rho(\mathbf{m})$ (12) is a statistical model based on expert prior data, each model-image $\mathbf{m}_{ss}{}^*$ (16) is a representation of an image of one, or more, pixels,
- obtain training sets, each training set comprises a sim-data-image $\mathbf{d}_{ss,sim}{}^*$ (18) and an expected output $\mathbf{m}_f{}^*$ (21), by determining the sim-data-image $\mathbf{d}_{ss,sim}{}^*$ (18) based on the model-image $\mathbf{m}_{ss}{}^*$ (16), and selecting the expected output $\mathbf{m}_f{}^*$ (21) based on the model-image $\mathbf{m}_{ss}{}^*$ (16) for each sim-data-image $\mathbf{d}_{ss,sim}{}^*$ (18), each sim-data-image $\mathbf{d}_{ss,sim}{}^*$ (18) is a representation of one, or more, pixels,
- apply the training sets as input for training the machine learning system (36), and obtaining a output $\mathbf{m}_o$ (34) for each sim-data-image $\mathbf{d}_{ss,sim}{}^*$ (18) from the machine learning system, and
- train the machine learning system until the machine learning system converges based on comparing the outputs $\mathbf{m}_o$ (34) with the expected outputs $\mathbf{m}_f{}^*$ (21);

**characterized in that**
the sim-data-image $\mathbf{d}_{ss,sim}{}^*$ (18) is determined from the model-image $\mathbf{m}_{ss}{}^*$ (16) by the function of the type $\mathbf{d}_{ss,sim}{}^*$ = $g(\mathbf{m}_{ss}{}^*) + n(\mathbf{m}_{ss}{}^*)$, wherein g is a smoothing function and n is a noise function.

12. A computer program software being adapted to enable a computer system comprising at least one computer having data storage means in connection therewith to control a medical image device according to claim 11, such as a computer program product comprising instructions which, when the program is executed by a computer, cause the computer to carry out the method according to any of the claims 1-10.

**Patentansprüche**

1. Computerimplementiertes Verfahren zur Bildanalyse und -rekonstruktion zur medizinischen Bildgebung eines Subjekts, das Verfahren umfassend:

- Erhalten eines PET-Bildes (30) und Aufteilen des PET-Bildes (30) in eine Vielzahl von Teilbildern $d_{sso}$ (32), wobei jedes Teilbild $d_{sso}$ (32) eine Darstellung von einem oder mehreren Pixeln ist,
- Bereitstellen eines trainierten maschinellen Lernsystems (36),
- Anwenden der Teilbilder $d_{sso}$ (32) als Eingabe für das trainierte maschinelle Lernsystem (36),
- Erhalten einer Ausgabe $m_o$ (34) für jedes Teilbild $d_{sso}$ (32) aus dem trainierten maschinellen Lernsystem,
- Bestimmen und Ausgeben einer Darstellungsausgabe (38) basierend auf den Ausgaben $m_o$ (34);

wobei das Bereitstellen eines trainierten maschinellen Lernsystems (36) umfasst:

- Erhalten eines Modellbildes $m_{ss}{}^*$ (16) aus einer Stichprobe M* (14), wobei das Modellbild $m_{ss}{}^*$ (16) eine Realisierung aus einer Priorverteilung $\rho(m)$ (12) ist, wobei die Priorverteilung $\rho(m)$ (12) ein statistisches Modell ist, das auf Experten-Priorverteilungsdaten basiert, wobei jedes Modellbild $m_{ss}{}^*$ (16) eine Darstellung eines Bildes von einem oder mehreren Pixeln ist,
- Erhalten von Trainingssätzen, wobei jeder Trainingssatz ein Simulationsdatenbild $d_{ss,sim}{}^*$ (18) und eine erwartete Ausgabe $m_f{}^*$ (21) umfasst, durch Bestimmen des Simulationsdatenbildes $d_{ss,sim}{}^*$ (18) basierend auf dem Modellbild $m_{ss}{}^*$ (16) und durch Auswählen der erwarteten Ausgabe $m_f{}^*$ (21) basierend auf dem Modellbild $m_{ss}{}^*$ (16) für jedes Simulationsdatenbild $d_{ss,sim}{}^*$ (18), wobei jedes Simulationsdatenbild $d_{ss,sim}{}^*$ (18) eine Darstellung von einem oder mehreren Pixeln ist,
- Anwenden der Trainingssätze als Eingabe zum Trainieren des maschinellen Lernsystems (36), und Erhalten einer Ausgabe $m_o$ (34) für jedes Simulationsdatenbild $d_{ss,sim}{}^*$ (18) aus dem maschinellen Lernsystem, und
- Trainieren des maschinellen Lernsystems, bis das maschinelle Lernsystem basierend auf einem Vergleich der

Ausgaben $m_o$ (34) mit den erwarteten Ausgaben $m_f^*$ (21) konvergiert;
**dadurch gekennzeichnet, dass**
das Simulationsdatenbild $d_{ss,sim}^*$ (18) aus dem Modellbild $m_{ss}^*$ (16) durch die Funktion des Typs $d_{ss,sim}^* = g(m_{ss}^*) + n(m_{ss}^*)$ bestimmt wird,
wobei g eine Glättungsfunktion ist und n eine Rauschfunktion ist.

2. Computerimplementiertes Verfahren zur Bildanalyse und -rekonstruktion nach Anspruch 1, wobei das Bereitstellen eines trainierten maschinellen Lernsystems (36) umfasst:

   - Auswählen des trainierten maschinellen Lernsystems (36) aus einer Vielzahl von trainierten maschinellen Lernsystemen basierend auf dem Typ der zu erhaltenden Ausgabe $m_o$ (34).

3. Computerimplementiertes Verfahren zur Bildanalyse und -rekonstruktion nach einem der Ansprüche 1-2, wobei die ausgewählte erwartete Ausgabe $m_f^*$ (21) die Pixelintensität des zentralen Pixels oder einer Gruppe von zentralen Pixeln im Modellbild $m_{ss}^*$ (16) ist.

4. Computerimplementiertes Verfahren zur Bildanalyse und -rekonstruktion nach einem der Ansprüche 1-2, wobei die ausgewählte erwartete Ausgabe $m_f^*$ (21) die Anzahl der Pixel ist, die mit dem zentralen Pixel im Modellbild $m_{ss}^*$ (16) verbunden sind und eine Intensität aufweisen, die höher ist als ein Schwellenintensitätswert, oder eine Wahrscheinlichkeit für eine Krankheit, beispielsweise Krebs, aufweisen, die höher ist als ein Schwellenwahrscheinlichkeitswert.

5. Computerimplementiertes Verfahren zur Bildanalyse und -rekonstruktion nach einem der Ansprüche 1-2, wobei die erwartete Ausgabe $m_f^*$ (21) eine Kategorie des zentralen Pixels oder eine Gruppe von zentralen Pixeln im Modellbild $m_{ss}^*$ (16) ist oder wobei die erwartete Ausgabe $m_f^*$ eine Wahrscheinlichkeit für eine oder mehrere Kategorien ist.

6. Computerimplementiertes Verfahren zur Bildanalyse und -rekonstruktion nach einem der Ansprüche 1-2, wobei die erwartete Ausgabe $m_f^*$ (21) ein Vektor mit zwei Werten ist, dem Mittelwert und der Kovarianz für eine Normalverteilung.

7. Computerimplementiertes Verfahren zur Bildanalyse und -rekonstruktion nach einem der vorstehenden Ansprüche, wobei die Ausgabe $m_o$ (34) ein numerischer Wert wie eine Pixelintensität oder ein Mittelwert und eine Kovarianz für eine Anzahl von Pixeln oder eine Anzahl von Pixeln ist oder wobei die erwartete Ausgabe $m_o$ eine Kategorie oder eine Wahrscheinlichkeit für eine oder mehrere Kategorien ist.

8. Computerimplementiertes Verfahren zur Bildanalyse und -rekonstruktion nach einem der vorstehenden Ansprüche, wobei die Ausgänge $m_o$ (34) zu einer Darstellungsausgabe (38) geordnet sind.

9. Computerimplementiertes Verfahren zur Bildanalyse und -rekonstruktion nach einem der Ansprüche 1-8, wobei das maschinelle Lernsystem (36) eine Regressionstypabbildung, wenn die erwartete Ausgabe $m_f^*$ (21) einen numerischen Wert darstellt, oder eine Klassifizierungstypabbildung, wenn die erwartete Ausgabe $m_f^*$ eine Kategorie darstellt, umfasst.

10. Computerimplementiertes Verfahren zur Bildanalyse und -rekonstruktion nach einem der vorstehenden Ansprüche, wobei das maschinelle Lernsystem (36) ein neuronales Netzwerk umfasst.

11. Medizinisches Bildgebungssystem, umfassend einen Scanner (112) und ein Steuersystem (111) zum Scannen und Aufzeichnen eines PET-Bildes und einen Prozessor (120), wobei der Prozessor konfiguriert ist zum

    - Erhalten des PET-Bildes (30) und Aufteilen des PET-Bildes (30) in eine Vielzahl von Teilbildern $d_{sso}$ (32), wobei jedes Teilbild $d_{sso}$ (32) eine Darstellung von einem oder mehreren Pixeln ist,
    - Bereitstellen eines trainierten maschinellen Lernsystems (36), und Anwenden der Teilbilder $d_{sso}$ (32) als Eingabe für das trainierte maschinelle Lernsystem (36),
    - Erhalten einer Ausgabe $m_o$ (34) für jedes Teilbild $d_{sso}$ (32) aus dem maschinellen Lernsystem,
    - Bestimmen und Ausgeben einer Darstellungsausgabe (38) basierend auf der Ausgabe $m_o$;

    wobei das Bereitstellen eines trainierten maschinellen Lernsystems (36) umfasst:

- Erhalten eines Modellbildes $m_{ss}^*$ (16) aus einer Stichprobe M* (14), wobei das Modellbild $m_{ss}^*$ (16) eine Realisierung aus einer Priorverteilung $\rho(m)$ (12) ist, wobei die Priorverteilung $\rho(m)$ (12) ein statistisches Modell ist, das auf Experten-Priorverteilungsdaten basiert, wobei jedes Modellbild $m_{ss}^*$ (16) eine Darstellung eines Bildes von einem oder mehreren Pixeln ist,

- Erhalten von Trainingssätzen, wobei jeder Trainingssatz ein Simulationsdatenbild $d_{ss,sim}^*$ (18) und eine erwartete Ausgabe $m_f^*$ (21) umfasst, durch Bestimmen des Simulationsdatenbildes $d_{ss,sim}^*$ (18) basierend auf dem Modellbild $m_{ss}^*$ (16) und durch Auswählen der erwarteten Ausgabe $m_f^*$ (21) basierend auf dem Modellbild $m_{ss}^*$ (16) für jedes Simulationsdatenbild $d_{ss,sim}^*$ (18), wobei jedes Simulationsdatenbild $d_{ss,sim}^*$ (18) eine Darstellung von einem oder mehreren Pixeln ist,

- Anwenden der Trainingssätze als Eingabe zum Trainieren des maschinellen Lernsystems (36), und Erhalten einer Ausgabe $m_o$ (34) für jedes Simulationsdatenbild $d_{ss,sim}^*$ (18) aus dem maschinellen Lernsystem, und
- Trainieren des maschinellen Lernsystems, bis das maschinelle Lernsystem basierend auf einem Vergleich der Ausgaben $m_o$ (34) mit den erwarteten Ausgaben $m_f^*$ (21) konvergiert;

**dadurch gekennzeichnet, dass**

das Simulationsdatenbild $d_{ss,sim}^*$ (18) aus dem Modellbild $m_{ss}^*$ (16) durch die Funktion des Typs $d_{ss,sim}^* = g(m_{ss}^*) + n(m_{ss}^*)$ bestimmt wird, wobei g eine Glättungsfunktion ist und n eine Rauschfunktion ist.

12. Computerprogrammsoftware, die angepasst ist, um einem Computersystem, umfassend mindestens einen Computer, der damit in Verbindung stehende Datenspeichermittel aufweist, zu ermöglichen, eine medizinische Bildgebungsvorrichtung nach Anspruch 11 zu steuern, wie beispielsweise ein Computerprogrammprodukt, umfassend Anweisungen, die, wenn das Programm durch einen Computer ausgeführt wird, den Computer dazu veranlassen, das Verfahren nach einem der Ansprüche 1-10 durchzuführen.

## Revendications

1. Procédé mis en oeuvre par ordinateur pour analyse et reconstruction d'image pour l'imagerie médicale d'un sujet, le procédé comprenant :

   - l'obtention d'une image PET (30) et la division de l'image PET (30) en une pluralité d'images de sous-ensemble $\mathbf{d}_{sso}$ (32), chaque image de sous-ensemble $\mathbf{d}_{sso}$ (32) est une représentation d'un ou de plusieurs pixels,
   - la fourniture d'un système d'apprentissage automatique formé (36),
   - l'application des images de sous-ensemble $\mathbf{d}_{sso}$ (32) en tant qu'entrée pour le système d'apprentissage automatique formé (36),
   - l'obtention d'une sortie $m_o$ (34) pour chaque image de sous-ensemble $\mathbf{d}_{sso}$ (32) depuis le système d'apprentissage automatique formé,
   - la détermination et la délivrance d'une sortie de représentation (38) sur la base des sorties $\mathbf{m}_o$ (34) ;
   dans lequel la fourniture d'un système d'apprentissage automatique formé (36) comprend :

      - l'obtention d'une image-modèle $\mathbf{m}_{ss}^*$ (16) à partir d'un échantillon M* (14), l'image-modèle $\mathbf{m}_{ss}^*$ (16) est une réalisation à partir d'une $\rho(\mathbf{m})$ antérieure (12), la $\rho(\mathbf{m})$ antérieure (12) est un modèle statistique basé sur des données d'expertise antérieures, chaque image-modèle $\mathbf{m}_{ss}^*$ (16) est une représentation d'une image d'un ou de plusieurs pixels,
      - l'obtention d'ensembles de formation, chaque ensemble de formation comprend une sim-données-image $\mathbf{d}_{ss,sim}^*$ (18) et une sortie attendue $\mathbf{m}_f^*$ (21), en déterminant la sim-données-image $\mathbf{d}_{ss,sim}^*$ (18) sur la base de l'image-modèle $\mathbf{m}_{ss}^*$ (16), et la sélection de la sortie attendue $\mathbf{m}_f^*$ (21) sur la base de l'image-modèle $\mathbf{m}_{ss}^*$ (16) pour chaque sim-données-image $\mathbf{d}_{ss,sim}^*$ (18), chaque sim-données-image $\mathbf{d}_{ss,sim}^*$ (18) est une représentation d'un ou de plusieurs pixels,
      - l'application des ensembles de formation en tant qu'entrée pour former le système d'apprentissage automatique (36), et l'obtention d'une sortie $\mathbf{m}_o$ (34) pour chaque sim-données-image $\mathbf{d}_{ss,sim}^*$ (18) à partir du système d'apprentissage automatique, et
      - la formation du système d'apprentissage automatique jusqu'à ce que le système d'apprentissage automatique converge sur la base de la comparaison des sorties $\mathbf{m}_o$ (34) avec les sorties attendues $\mathbf{m}_f^*$ (21) ;

   **caractérisé en ce que** la sim-données-image $\mathbf{d}_{ss,sim}^*$ (18) est déterminée à partir de l'image-modèle $\mathbf{m}_{ss}^*$ (16) par la fonction du type $\mathbf{d}_{ss,sim}^* = g(\mathbf{m}_{ss}^*) + n(\mathbf{m}_{ss}^*)$,
   dans lequel g est une fonction de lissage et n est une fonction de bruit.

**2.** Procédé mis en œuvre par ordinateur pour analyse et reconstruction d'image selon la revendication 1, dans lequel la fourniture d'un système d'apprentissage automatique formé (36) comprend :

- la sélection du système d'apprentissage automatique formé (36) parmi une pluralité de systèmes d'apprentissage automatique formés sur la base du type de la sortie $m_o$ (34) à obtenir.

**3.** Procédé mis en œuvre par ordinateur pour analyse et reconstruction d'image selon l'une quelconque des revendications 1 et 2, dans lequel la sortie attendue sélectionnée $m_f^*$ (21) est l'intensité de pixel du pixel central, ou d'un groupe de pixels centraux dans l'image-modèle $m_{ss}^*$ (16).

**4.** Procédé mis en œuvre par ordinateur pour analyse et reconstruction d'image selon l'une quelconque des revendications 1 et 2, dans lequel la sortie attendue sélectionnée $m_f^*$ (21) est le nombre de pixels connectés au pixel central dans l'image-modèle $m_{ss}^*$ (16) avec une intensité plus élevée qu'une valeur d'intensité seuil ou une probabilité d'une maladie, par exemple un cancer, plus élevée qu'une valeur de probabilité seuil.

**5.** Procédé mis en œuvre par ordinateur pour analyse et reconstruction d'image selon l'une quelconque des revendications 1 et 2, dans lequel la sortie attendue $m_f^*$ (21) est une catégorie du pixel central, ou un groupe de pixels centraux, dans l'image-modèle $m_{ss}^*$ (16) ou la sortie attendue $m_f^*$ est une probabilité pour une ou plusieurs catégories.

**6.** Procédé mis en œuvre par ordinateur pour analyse et reconstruction d'image selon l'une quelconque des revendications 1 et 2, dans lequel la sortie attendue $m_f^*$ (21) est un vecteur avec deux valeurs, la moyenne et la covariance pour une distribution normale.

**7.** Procédé mis en œuvre par ordinateur pour analyse et reconstruction d'image selon l'une quelconque des revendications précédentes, dans lequel la sortie $m_o$ (34) est une valeur numérique telle une intensité de pixel ou une valeur moyenne et une covariance pour un nombre de pixels, ou un nombre de pixels, ou la sortie attendue $m_o$ est une catégorie ou une probabilité pour une ou plusieurs catégories.

**8.** Procédé mis en œuvre par ordinateur pour analyse et reconstruction d'image selon l'une quelconque des revendications précédentes, dans lequel les sorties $m_o$ (34) sont ordonnées dans une sortie de représentation (38).

**9.** Procédé mis en œuvre par ordinateur pour analyse et reconstruction d'image selon l'une quelconque des revendications 1 à 8, dans lequel le système d'apprentissage automatique (36) comprend un mappage de type régression, lorsque la sortie attendue $m_f^*$ (21) représente une valeur numérique, ou un mappage de type classification, lorsque la sortie attendue $m_f^*$ représente une catégorie.

**10.** Procédé mis en œuvre par ordinateur pour analyse et reconstruction d'image selon l'une quelconque des revendications précédentes, dans lequel le système d'apprentissage automatique (36) comprend un réseau neuronal.

**11.** Système d'imagerie médicale comprenant un scanner (112) et un système de commande (111) pour scanner et enregistrer une image PET, et un processeur (120),

dans lequel le processeur est configuré pour

- obtenir l'image PET (30) et diviser l'image PET (30) en une pluralité d'images de sous-ensemble $d_{sso}$ (32), chaque image de sous-ensemble $d_{sso}$ (32) est une représentation d'un ou de plusieurs pixels,
- fournir un système d'apprentissage automatique formé (36), et appliquer les images de sous-ensemble $d_{sso}$ (32) en tant qu'entrée pour le système d'apprentissage automatique formé (36),
- obtenir une sortie $m_o$ (34) pour chaque image de sous-ensemble $d_{sso}$ (32) depuis le système d'apprentissage automatique,
- déterminer et délivrer une sortie de représentation (38) sur la base de la sortie $m_o$ ;

dans lequel la fourniture d'un système d'apprentissage automatique formé (36) comprend :

- l'obtention d'une image-modèle $m_{ss}^*$ (16) à partir d'un échantillon $M^*$ (14), l'image-modèle $m_{ss}^*$ (16) est une réalisation à partir d'une $\rho(m)$ antérieure (12), la $\rho(m)$ antérieure (12) est un modèle statistique basé sur des données d'expertise antérieures, chaque image-modèle $m_{ss}^*$ (16) est une représentation d'une image d'un ou de plusieurs pixels,

- l'obtention d'ensembles de formation, chaque ensemble de formation comprend une sim-données-image $d_{ss,sim}$* (18) et une sortie attendue $m_f$* (21), en déterminant la sim-données-image $d_{ss,sim}$* (18) sur la base de l'image-modèle $m_{ss}$* (16), et la sélection de la sortie attendue $m_f$* (21) sur la base de l'image-modèle $m_{ss}$* (16) pour chaque sim-données-image $d_{ss,sim}$* (18), chaque sim-données-image $d_{ss,sim}$* (18) est une représentation d'un ou de plusieurs pixels,

- l'application des ensembles de formation en tant qu'entrée pour former le système d'apprentissage automatique (36), et l'obtention d'une sortie $m_o$ (34) pour chaque sim-données-image $d_{ss,sim}$* (18) à partir du système d'apprentissage automatique, et

- la formation du système d'apprentissage automatique jusqu'à ce que le système d'apprentissage automatique converge sur la base de la comparaison des sorties $m_o$ (34) avec les sorties attendues $m_f$* (21) ;

**caractérisé en ce que** la sim-données-image $d_{ss,sim}$* (18) est déterminée à partir de l'image-modèle $m_{ss}$* (16) par la fonction du type $d_{ss,sim}$* = $g(m_{ss}$*$) + n(m_{ss}$*$)$, dans lequel g est une fonction de lissage et n est une fonction de bruit.

12. Logiciel de programme informatique adapté pour permettre à un système informatique comprenant au moins un ordinateur présentant un moyen de stockage de données en connexion avec celui-ci de commander un dispositif d'imagerie médicale selon la revendication 11, tel qu'un produit-programme informatique comprenant des instructions qui, lorsque le programme est mis en œuvre par un ordinateur, amènent l'ordinateur à mettre en oeuvre le procédé selon l'une quelconque des revendications 1 à 10.

Fig. 1

Fig 2a

Fig. 2b

Fig. 3

Fig. 4

Fig. 5

Fig. 6

Fig. 7

Fig. 8

Fig. 9

| No. | Layer | Neurons | Parameters |
|---|---|---|---|
| 1 | Input | 121 | 121 |
| 2 | Dense | 20 | 2440 |
| 3 | Dense | 20 | 420 |
| 4 | Output | 2 | 42 |

Fig. 10

| No. | Layer | Neurons | Parameters |
|---|---|---|---|
| 1 | Input | 121 | 121 |
| 2 | Conv2d | 32 | 320 |
| 3 | Max_pooling2d | 32 | 0 |
| 4 | Conv2d | 64 | 18496 |
| 5 | Max_pooling2d | 64 | 0 |
| 6 | Flatten | 64 | 0 |
| 7 | Output | 2 | 130 |

Fig. 11

Fig. 12b

Fig. 12a

Fig. 13a

Fig. 13b

Fig. 14

Fig. 15

EP 4 302 261 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020043163 A, Gong Kuang

**Non-patent literature cited in the description**

- **TARANTOLA, A.** ; **VALETTE, B.** Inverse problems= quest for information.. *Journal of geophysics*, 1982, vol. 50 (1), 159-170
- **DEUTSCH, C. V.** ; **JOURNEL, A. G.** *Geostatistical software library and user's guide.*, 1992, vol. 119 (147)
- **MARIETHOZ, G.** ; **CAERS, J.** Multiple-point geostatistics: stochastic modelling with training images.. John Wiley & Sons, 2014
- **BISHOP, CHRISTOPHER M.** Pattern, Recognition and machine learning.. Springer, 2006
- **KINGMA** ; **DIEDERIK P.** ; **JIMMY BA.** Adam: A method for stochastic optimization.. *arXiv preprint arXiv:1412.6980*, 2014
- **MARIETHOZ, G.** ; **CAERS, J.** Multiple-point geostatistics: stochastic modeling with training images.. John Wiley & Sons, 2014